# EUROPÄISCHE PATENTSCHRIFT

(11) **EP 2 885 228 B1**
(45) Veröffentlichungstag und Bekanntmachung des Hinweises auf die Patenterteilung: **15.06.2016**
(21) Anmeldenummer: 14752604.0
(22) Anmeldetag: 13.08.2014
(51) Int. Cl.: B65G 1/137

(54) **KOMMISSIONIERANLAGE UND KOMMISSIONIERVERFAHREN**
ORDER-PICKING SYSTEM AND METHOD
INSTALLATION ET PROCÉDÉ DE PRÉPARATION DE COMMANDES

(30) Priorität: 18.09.2013 AT 501212013
(43) Veröffentlichungstag der Anmeldung: 24.06.2015
(73) Patentinhaber: Knapp AG, 8075 Hart bei Graz (AT)
(72) Erfinder: MATHI, Franz, A-8200 Gleisdorf (AT); PUCHWEIN, Peter, A-8071 Vasoldsberg (AT); LEHNER, Oliver, A-8020 Graz (AT)
(74) Vertreter: Röggla, Harald
(86) Internationale Anmeldenummer: PCT/EP2014/067338
(87) Internationale Veröffentlichungsnummer: WO 2015/039818

(56) Entgegenhaltungen:
- WO-A1-2011/151275
- WO-A2-2006/051329
- AT-U1- 898
- DE-A1- 19 606 349
- DE-U1- 9 203 273

## Beschreibung

Die Erfindung betrifft eine Kommissionieranlage mit einem Steuerrechner zum Kommissionieren von Produkten für einen Kommissionierauftrag, wobei die Kommissionieranlage zumindest eine Regaleinheit mit zwei Regalen zum Lagern von Produkten und einem in einer durch die zwei Regale gebildeten Regalgasse vorgesehenen Transportsystem zum Ein- und Auslagern der Produkte aufweist und, wobei aus den Regalen ausgelagerte Produkte an einen Zwischenlagerplatz abgebbar sind und, wobei eine Fördertechnik zum Fördern der Produkte vorgesehen ist.

Die Erfindung betrifft weiters ein Kommissionierverfahren zum Kommissionieren von Produkten.

Das Dokument WO 2011/151275 A1 offenbart eine solche gattungsgemäße Kommissionieranlage und ein solches Kommissionierverfahren, bei dem Produkte in einem mehrere Regale aufweisenden Regallager gelagert sind. Jeweils zwei Regale bilden eine Regalgasse, in der ein Transportsystem zum Ein- und Auslagern von Produkten vorgesehen ist. Die Kommissionieranlage weist einen Ware-zu-Mann-Arbeitsplatz auf, zu dem einem Kommissionierauftrag zugehörige aus dem Regallager ausgelagerte Produkte transportiert werden, um dort von dem Bedienpersonal in der richtigen Stückzahl in einen dem Kommissionierauftrag zugeordneten Auftragsbehälter gelegt zu werden.

Die bekannte Kommissionieranlage weist weiters eine Zentralbandtechnik mit einem Zentralband und entlang dem Zentralband angeordneten Zentralbandautomaten auf. In diesen Zentralbandautomaten wird je Stellplatz eine Produktart eines schnell drehenden, also oft in Kommissionieraufträgen enthaltenen Produkts gespeichert und von einem Steuerrechner gesteuert zum richtigen Zeitpunkt auf den einem Kommissionierauftrag zugeordneten Zentralbandabschnitt des Zentralbands kommissioniert.

Um in dem Regallager gelagerte Produkte in den Zentralbandautomaten nachschlichten zu können, weist die bekannte Kommissionieranlage Durchlaufkanäle und an diese Durchlaufkanäle anschließende Zwischenlagerplätze auf, in denen aus dem Regallager ausgelagerte Produkte zum Nachschlichten in den Zentralbandautomaten zwischengespeichert werden. Wenn eine Produktart droht in einem Stellplatz des Zentralbandautomaten auszugehen, dann holt eine Bedienperson Produkte dieser Produktart aus den Zwischenlagerplätzen und schlichtet den Zentralbandautomaten nach.

Bei der bekannten Kommissionieranlage und bei dem bekannten Kommissionierverfahren hat sich als Nachteil ergeben, dass in dem Regallager gelagerte langsam drehende Produkte nicht automatisiert kommissioniert werden können und, dass in dem Zentralbandautomaten gelagerte schnell drehende Produkt nicht gemeinsam mit den langsam drehenden Produkten automatisiert kommissioniert werden können.

Der Erfindung liegt die Aufgabe zugrunde eine automatische Kommissionierung von in einem Regallager gelagerten Produkten mittels einer Fördertechnik und insbesondere einer Zentralbandtechnik zu ermöglichen. Erfindungsgemäß wird diese Aufgabestellung dadurch gelöst, dass zumindest zwei Pufferschalen als Zwischenlagerplatz vorgesehen sind und, dass der Steuerrechner durch Ansteuerung des Transportsystems und der Pufferschalen zum Kommissionieren von Teilkommissionieraufträgen der in den

Regalen einer Regaleinheit enthaltenen Produkte eines Kommissionierauftrags in jeweils eine der Pufferschalen ausgebildet is, und dass der Lagerverwaltungsrechner zum Zusammenführen der Teilkommissionieraufträge eines Kommissionierauftrags auf der Fördertechnik durch Ansteuerung des Transportsystems und der Pufferschalen ausgebildet ist.

Hierdurch ist der Vorteil erhalten, dass der Lagerverwaltungsrechner die in den zwei Regalen der Regaleinheit gelagerten Produkte eines Kommissionierauftrags mittels des in der Regalgasse vorgesehenen Transportsystems in die dem Kommissionierauftrag zugeordnete Pufferschale auslagern, die dann dort zwischenspeichert werden können. Da zumeist nicht alle Produkte eines Kommissionierauftrags in dieser Regaleinheit gelagert sind und weitere Produkte des Kommissionierauftrags von anderen Regaleinheiten zugeführt werden müssen, enthält die dem Kommissionierauftrag zugeordnete Pufferschale somit die Produkte eines Teilkommissionierauftrags. Aus einer oder mehreren an der Fördertechnik angeordneten weiteren Regaleinheiten kann der Steuerrechner vorerst weitere Teilkommissionieraufträge in diesem Kommissionierauftrag zugeordneten weiteren Pufferschalen vorkommissionieren und anschließend auf dem Zentralband zusammenführen. Die Regaleinheit mit den zwei Regalen und dem Transportsystem in der Regalgasse stellt hierbei eine besonders praktikable und flexible Einheit verglichen mit einem eine Vielzahl an Regalen und Regalgassen aufweisenden Regallager dar.

Die einem Kommissionierauftrag von dem Lagerverwaltungsrechner zugeordneten und entlang des Zentralbandes angeordneten Pufferschalen werden von dem Lagerverwaltungsrechner zeitgerecht so angesteuert, dass diese die Produkte ihrer Teilkommissionieraufträge auf einen dem Kommissionierauftrag zugeordneten Zentralbandabschnitt des Zentralbandes ausleeren. Zusätzlich können schnell drehende Produkte aus einem Zentralbandautomaten von dem Lagerverwaltungsrechner gesteuert zeitgerecht auf den Zentralbandabschnitt des Kommissionierauftrags kommissioniert werden. Diese Zusammenführung der Produkte mehrerer Teilkommissionieraufträge aus mehreren Regaleinheiten wird erste durch die Verwendung der Pufferschalten als Zwischenspeicher ermöglicht.

Hierdurch ist der Vorteil erhalten, dass auf das Zentralband sowohl langsam drehende Produkte aus der oder den Regaleinheiten als auch schnell drehende Produkte, die in Zentralbandautomaten gelagert sind, automatisiert kommissioniert werden können. Die Anzahl der entlang dem Zentralband angeordneten Regaleinheiten ist praktisch beliebig erweiterbar und es können weitere mit anderen Kommissionierarten vorkommissionierte Teilkommissionieraufträge des Kommissionierauftrags auf das Zentralband kommissioniert werden.

Als vorteilhaft hat sich auch erwiesen statt des Zentralbandes eine durch beispielsweise ein Förderband gebildete Fördertechnik zu verwenden, auf der Auftragsbehälter des Kommissionierauftrags entlang der Pufferschalen transportiert werden, wobei die Produkte der Teilkommissionieraufträge aus den Pufferschalen gleich unmittelbar in den zugehörigen Auftragsbehälter kommissioniert werden.

Zur Einlagerung von Produkten in die Regaleinheit hat es sich als vorteilhaft erwiesen ein Pufferband und/oder Pufferschalen vorzusehen. Hierdurch ist der Vorteil erhalten, dass das Transportsystem jederzeit Produkte Auslagern kann und nur dann, wenn keine Auslagerung nötig ist, die auf dem Pufferband bzw. den Pufferschalen zwischengespeicherten Produkte einlagern kann.

Weitere vorteilhafte Ausgestaltungen der erfindungsgemäßen Kommissionieranlage und des erfindungsgemäßen Kommissionierverfahrens werden im Folgenden anhand der Figuren näher erläutert.
Figur 1 zeigt eine Kommissionieranlage mit zwei Regaleinheiten entlang eines Zentralbandes in einer Schrägansicht.
Figur 2 zeigt die Kommissionieranlage gemäß Figur 1 in einer Draufsicht.
Figur 3 zeigt die zwei Regaleinheiten der Kommissionieranlage gemäß Figur 1 in einer Seitenansicht.

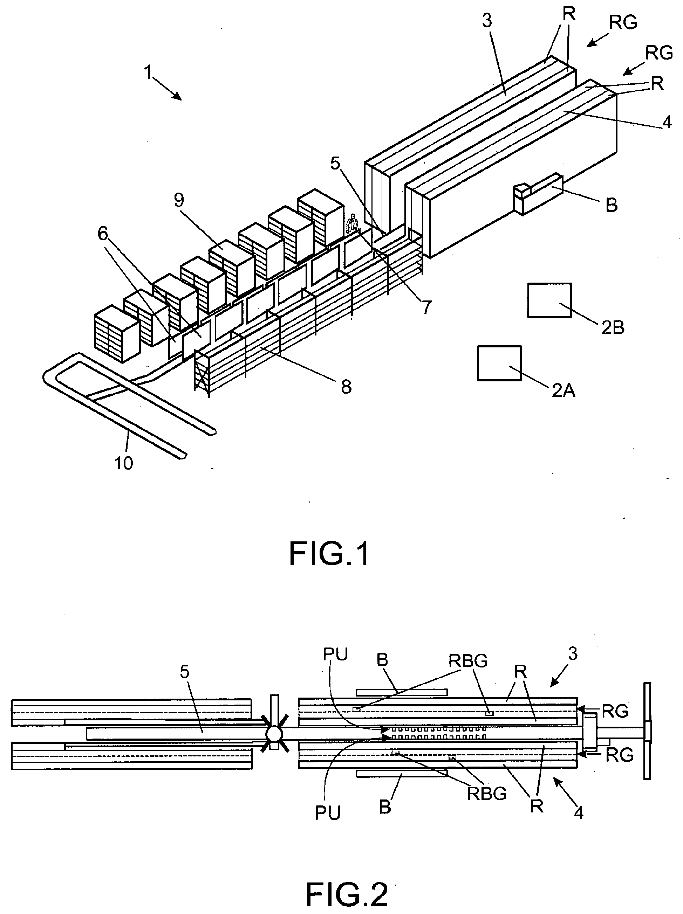

Figur 1 zeigt eine Kommissionieranlage 1 mit einem Steuerrechner 2A und einem Lagerverwaltungsrechner 2B zum Kommissionieren von Produkten P für einen Kommissionierauftrag. Die Kommissionieraufträge werden dem Lagerverwaltungsrechner von einem Auftragsrechner zur Kommissionierung der bestellten Produkte zugeführt. In dem Lagerverwaltungsrechner ist gespeichert, welche Produktarten in welchen Teilen des Lagers gelagert sind. Die Kommissionieranlage 1 weist zwei Regaleinheiten 3 und 4 auf, die jeweils zwei Regale R zum Lagern von Produkten und eine durch die Regale R gebildete Regalgasse RG aufweisen. In der Regalgasse RG ist ein Transportsystem zum Ein- und Auslagern der Produkte P vorgesehen. Das Transportsystem ist durch ein dem Fachmann bekanntes Regalbediengerät RBG gebildet, das je Regal R ein auf Schienen fahrendes Fahrzeug mit einer in seiner Höhe verstellbaren Plattform zum Ein- und Auslagern der Produkte P in und aus dem Regal R aufweist.

Jede der beiden Regaleinheiten 3 und 4 weist zur Einlagerung von Produkten in eines der Regale R ein Pufferband B auf. Einzulagernde Produkte P werden von einem Scanner des Lagervelwaltungsrechners 2B erkannt und den Regalbediengeräten RBG der Regaleinheit 3 oder 4 zur Einlagerung zugeführt. Um ein zeitgerechtes Auslagern der Produkte P eines Kommissionierauftrags zu gewährleisten, bevorzugt der Lagerverwaltungsrechner 2B bei der Ansteuerung der Regalbediengeräte RBG immer Auslagerungsaufträge und übernimmt Einlagerungen von Produkten P von dem Pufferband B in den jeweiligen Lagerplatz in eines der Regale R nur dann, wenn hierfür Zeit ist. Hierdurch ist der Vorteil erhalten, dass Kommissionieraufträge besonders schnell und zuverlässig durchgeführt werden können.

Die beiden Regaleinheiten 3 und 4 sind nunmehr an einem Zentralband 5 einer Zentralbandtechnik angeordnet, um aus der jeweiligen Regaleinheit 3 oder 4 ausgelagerte Produkte P eines Kommissionierauftrags, sogenannte Teilkommissionieraufträge, mittels des Zentralbandes 5 zusammen zu führen. Hierfür wird von dem Steuerrechner 2A ein Zentralbandabschnitt festgelegt, auf den die in Teilkommissionieraufträgen vorkommissionierten Produkte P des Kommissionierauftrags geleert werden.

Jede der Regaleinheiten 3 und 4 weist nunmehr zumindest zwei Pufferschalen PU als Zwischenlagerplatz auf, wobei der Lagerverwaltungsrechner 2B eine Pufferschale PU einem Kommissionierauftrag zuordnet, wenn in der Regaleinheit 3 oder 4 ein Produkt gelagert ist, dass für diesen Kommissionierauftrag kommissioniert werden soll. Diese Produkte werden dann durch den Steuerrechner 2A gesteuert von dem Regalbediengerät RBG aus dem Lagerplatz in der passenden Stückzahl entnommen und in die dem Kommissionierauftrag zugeordnete Pufferschale PU gelegt und so Teilkommissionieraufträge zusammengestellt.

In den Regaleinheiten 3 und 4 sind sogenannte "Langsamdreher" gelagert. Das sind Produkte, die nicht oft in Kommissionieraufträgen enthalten sind. An dem Zentralband 5 sind nunmehr auch Zentralbandautomaten 6 angeordnet, in denen sogenannte "Schnelldreher" gelagert sind. Bedienpersonen 7 schlichten aus Regalen 8 und 9 Produkte P in den Zentralbandautomaten 6 nach, wenn diese auszugehen drohen. Hierdurch ist der Vorteil erhalten, dass von der Kommissionieranlage 1 sowohl langsam drehende Produkte P aus den Regaleinheiten 3 und 4 als auch schnell drehende Produkte P aus den Zentralbandautomaten 6 auf das Zentralband 5 automatisiert kommissioniert werden können.

Die auf den Zentralbandabschnitt des Zentralbandes 5 geleerten Produkte P der Teilkommissionieraufträge werden einer Fördertechnik 10 zugeführt, auf der je Kommissionierauftrag zumindest ein Auftragsbehälter, transportiert wird. Das Zentralband 5 könnte auch durch ein normales Förderband ersetzt werden, auf dem Auftragsbehälter je Kommissionierauftrag transportiert werden und in die die Teilkommissionieraufträge direkt geleert werden. Die Fördertechnik zum Transport der Auftragsbehälter könnte auch durch ein Flurförderfahrzeug oder einen Hängeförderer realisiert sein.

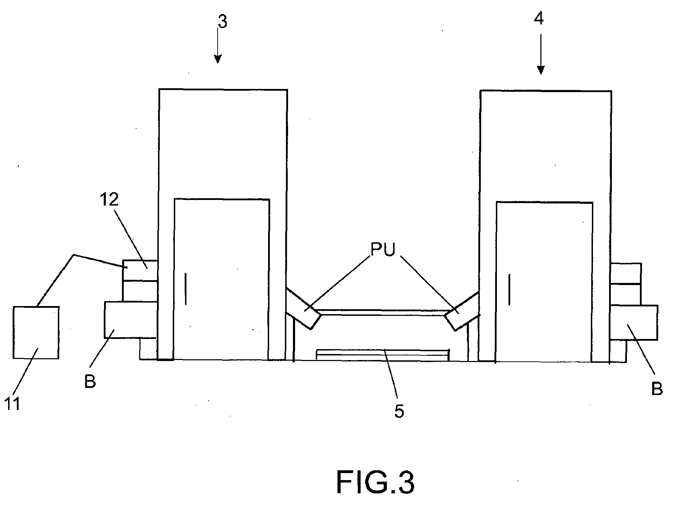

Figur 3 zeigt die zwei Regaleinheiten 3 und 4 gemäß Figur 1 in einer Seitenansicht. Es sind die schräg nach unten geneigten Pufferschalen PU erkennbar, in die die Regalbediengeräte RBG der Regaleinheiten 3 und 4 für einen Kommissionierauftrag Produkte P legen und somit bis zum Ausleeren auf das Zentralband 5 Zwischenspeichern. Jede Regaleinheit 3 und 4 kann 5, 10, 20 oder auch 50 Pufferschalen PU aufweisen, um mehrere Teilkommissionieraufträge parallel kommissionieren und anschließend kürzer oder länger Zwischenspeichern zu können.

Zur Einlagerung von Produkten P in die Regaleinheit 3 ist ein Roboter 11 vorgesehen, der aus einem auf das Pufferband B gelegten Einlagerungsbehälter auch sogenannte Retouren, also wieder einzulagernde Produkte unterschiedlicher Artikelart, entnimmt und nach Artikelart geordnet in Pufferschalen 12 legt. Wenn hierfür Zeit ist, dann übernimmt das Regalbediengerät RBG die Produkte P einer Artikelart aus einer der Pufferschalen 12 und lagert diese in den durch den Lagerverwaltungsrechner 2B vorgegebenen Lagerplatz ein. Ebenso könnte der Roboter 11 die Produkte P aus dem Einlagerungsbehälter entnehmen und Produkte P jeweils einer Produktart auf einen dieser Produktart von dem Lagerverwaltungsrechner 2B zugewiesenen Abschnitt des Pufferbandes B legen, welche Produkte P das Regalbediengerät RBG dann übernimmt und in die Regale R einlagert.

Der Steuerrechner 2A wendet bei der Ansteuerung ein Kommissionierverfahren zum Kommissionieren von Produkten P an, bei dem folgende Schritte durchgeführt werden. Vorerst werden Produkt P eines Kommissionierauftrags aus der Regaleinheit 3 und/oder 4, die je zwei Regale R und ein Transportsystem in der durch die Regale R gebildeten Regalgasse RG aufweisen, ausgelagert. Die von den Regaleinheiten 3 und 4 ausgelagerten Produkten P des Kommissionierauftrags werden in einer dem Kommissionierauftrag zugeordneten Pufferschale PU als Teilkommissionierauftrag gesammelt. Schließlich werden die einem Kommissionierauftrag zugehörigen Teilkommissionieraufträge auf einer Fördertechnik, insbesondere auf dem Zentralband 5, durch zeitgerechtes Entleeren der Pufferschalen PU zusammengeführt.

Es kann erwähnt werden, dass die Kommissionieranlage durch weitere an dem Zentralband oder der Fördertechnik angeordnete Regaleinheiten beliebig erweiterbar ist. Ebenso können dem Fachmann bekannte weitere Lagerarten (z.B. Karusselllager) entlang des Zentralbandes angeordnet sein, von denen zeitgerecht Produkte P weitere Teilkommissionieraufträge auf das Zentralband geleert werden.

Es kann erwähnt werden, dass anstatt des Regalbediengeräts in der Regaleinheit auch Ebenenbediengeräte je Ebene des Regals R vorgesehen sein könnten, wobei die ausgelagerten Produkte von den Ebenenbediengeräten an einen Lift und von diesem in die Pufferschalen abgegeben werden würde. Anstatt der Pufferschalen könnten auch vergleichbare Zwischenspeicher (z.B. Trichter, Röhren) zum Zwischenspeichern der aus der Regaleinheit ausgelagerten Produkte verwendet werden.

Es kann erwähnt werden, dass die Aufteilung der Steuerungsaufgaben zwischen Lagerverwaltungsrechner und Steuerrechner auch anders aufgeteilt sein kann oder es kann auch ein Rechner beide Steuerungsaufgaben übernehmen.

## Patentansprüche

1. Kommissionieranlage (1) mit einem Steuerrechner (2A) zum Kommissionieren von Produkten (P) für einen Kommissionierauftrag, wobei die Kommissionieranlage (1) zumindest eine Regaleinheit (3, 4) mit zwei Regalen (R) zum Lagern von Produkten (P) und einem in einer durch die zwei Regale (R) gebildeten Regalgasse (RG) vorgesehenen Transportsystem zum Ein- und Auslagern der Produkte (P) aufweist und, wobei aus den Regalen (R) ausgelagerte Produkte (P) an einen Zwischenlagerplatz abgebbar sind und, wobei eine Fördertechnik zum Fördern der Produkte (P) vorgesehen ist, **dadurch gekennzeichnet, dass**
zumindest zwei Pufferschalen (PU) als Zwischenlagerplatz vorgesehen sind und, dass der Steuerrechner (2A) zum Kommissionieren von Teilkommissionieraufträgen der in den Regalen (R) einer Regaleinheit (3, 4) enthaltenen Produkte (P) eines Kommissionierauftrags in jeweils eine der Pufferschalen (PU) und zum Zusammenführen der Teilkommissionieraufträge eines Kommissionierauftrags auf der Fördertechnik durch Ansteuerung des Transportsystems und der Pufferschalen (PU) ausgebildet ist.

2. Kommissionieranlage (1) gemäß Anspruch 1, **dadurch gekennzeichnet, dass** die Fördertechnik durch eine Zentralbandtechnik gebildet ist, auf deren Zentralband (5) von dem Steuerrechner (2A) je Kommissionierauftrag ein Zentralbandabschnitt festlegbar ist, in den die Teilkommissionieraufträge eines Kommissionierauftrags kommissioniert werden.

3. Kommissionieranlage (1) gemäß Anspruch 1, **dadurch gekennzeichnet, dass** die Fördertechnik durch einen Stetigförderer oder ein Flurförderfahrzeug oder einen Hängeförderer gebildet ist und, dass die Fördertechnik zum Transport zumindest eines Auftragsbehälters je Kommissionierauftrag ausgebildet ist, in den die Teilkommissionieraufträge des Kommissionierauftrags von dem Steuerrechner (2A) gesteuert kommissioniert werden.

4. Kommissionieranlage (1) gemäß einem der vorherigen Ansprüche, **dadurch gekennzeichnet, dass** das Transportsystem durch ein Regalbediengerät (RBG) gebildet ist, das je Regal (R) ein Fahrzeug zum Ein- und Auslagern der Produkte (P) in und aus dem Regal aufweist.

5. Kommissionieranlage (1) gemäß einem der vorherigen Ansprüche, **dadurch gekennzeichnet, dass** zur Einlagerung von Produkten (P) in die Regaleinheit (3, 4) ein Pufferband (B) und/oder Pufferschalen (PU) vorgesehen sind, von dem auf das Pufferband (B) aufgelegte und/oder in die Pufferschalen (PU) eingelegte Produkte (P) durch das Transportsystem übernommen und in die Regale (R) eingelagert werden.

6. Kommissionieranlage (1) gemäß Anspruch 5, **dadurch gekennzeichnet, dass** zur Einlagerung von Produkten (P) auf das Pufferband (B) und/oder die Pufferschalen (PU) ein Roboter (11) vorgesehen ist.

7. Kommissionieranlage (1) gemäß Anspruch 6, **dadurch gekennzeichnet, dass** dem Roboter (11) ein Einlagerungsbehälter mit in die Regale (R) einzulagernden Produkten (P) zuführbar ist, wobei der Roboter (11) zum Entnehmen verschiedener Produktarten aus dem Einlagerungsbehälter und zum Ablegen der Produkte (P) jeweils einer Produktart auf einen dieser Produktart von einem Lagerverwaltungsrechner (2B) zugewiesenen Abschnitt des Pufferbandes (B) und/oder in eine von dem Lagerverwaltungsrechner (2B) zugewiesene Pufferschale (12) ausgebildet ist.

8. Kommissionieranlage (1) gemäß einem der Ansprüche 1 bis 4, **dadurch gekennzeichnet, dass** zur Einlagerung von Produkten (P) ein Stetigförderer und/oder ein Flurförderfahrzeug und/oder ein Hängeförderer vorgesehen ist.

9. Kommissionieranlage (1) gemäß Anspruch 2, **dadurch gekennzeichnet, dass** entlang des Zentralbandes (5) Zentralbandautomaten (6) vorgesehen sind, die vom Steuerrechner (2A) gesteuert zum Abgeben von Produkten (P) des Kommissionierauftrags auf den dem Kommissionierauftrag zugeordneten Zentralbandabschnitt ausgebildet sind.

10. Kommissionieranlage (1) gemäß einem der vorherigen Ansprüche, **dadurch gekennzeichnet, dass** zumindest eine weitere Regaleinheit (4) entlang der Fördertechnik vorgesehen ist, und dass der Steuerrechner (2A) zum Kommissionieren von Teilkommissionieraufträgen aus beiden Regaleinheiten (3, 4) auf das Förderband ausgebildet ist.

11. Kommissionierverfahren zum Kommissionieren von Produkten (P), bei dem folgende Schritte durchgeführt werden:
Auslagern von Produkten (P) eines Kommissionierauftrags aus einer Regaleinheit (3, 4), die zwei Regale (R) und ein Transportsystems in der durch die Regale (R) gebildeten Regalgasse (RG) aufweist;
Sammeln von in der Regaleinheit (3, 4) gelagerten Produkten (P) des Kommissionierauftrags in einer dem Kommissionierauftrag zugeordneten Pufferschale (PU) als Teilkommissionierauftrag;
Zusammenführen der einem Kommissionierauftrag zugehörigen Teilkommissionieraufträge auf einer Fördertechnik, insbesondere auf einem Zentralband (5), durch zeitgerechtes Entleeren der Pufferschalen (PU).

## Claims

1. A picking facility (1) having a controlling computer (2A) for picking products (P) for a picking order, wherein the picking facility (1) has at least one rack unit (3, 4) having two racks (R) for storing products (P) and a transport system for storing and collecting the products (P) that is provided in a rack lane (RG) formed by the two racks (R) and wherein the products (P) collected from the racks (R) may be disposed in a temporary storage place and wherein there is provided a conveyor technology for conveying the products (P), **characterized in that**
there are provided at least two buffer jackets (PU) as a temporary storage place and that the controlling computer (2A) is configured for picking partial picking orders of the products (P) of a picking order, which are contained in the racks (R) of a rack unit (3, 4), into respectively one of the buffer jackets (PU) and for combining the partial picking orders of a picking order on the conveyor technology by activating the transport system and the buffer jackets (PU).

2. A picking facility (1) according to claim 1, **characterized in that** the conveyor technology is formed by a central band technology, on the central band (5) of which there may be determined by the controlling computer (2A) according to the picking order a central band section, into which the partial picking orders of a picking order are being picked.

3. A picking facility (1) according to claim 1, **characterized in that** the conveyor technology is formed by a continuous conveyor or a lane conveyor vehicle or a suspension conveyor and that the conveyor technology is configured to transport at least one order container per picking order, into which the partial picking orders of the picking order are being picked, controlled by the controlling computer (2A).

4. A picking facility (1) according to any of the preceding claims, **characterized in that** the transport system is formed by a rack operating device (RBG), which has one vehicle for storing and collecting the products (P) into and from the rack for each rack (R).

5. A picking facility (1) according to any of the preceding claims, **characterized in that** there is provided a buffer band (B) and/or buffer jackets (PU) for storing products (P) into the rack unit (3, 4), from which products (P) placed on the buffer band (B) and/or placed in the buffer jackets (PU) are taken over by the transport system and stored in the racks (R).

6. A picking facility (1) according to claim 5, **characterized in that** there is provided a robot (11) for storing products (P) onto the buffer band (B) and/or the buffer jackets (PU).

7. A picking facility (1) according to claim 6, **characterized in that** there may be fed to the robot (11) a storage container with products (P) to be stored in the racks (R), wherein the robot (11) is configured to collect different product types from the storage container and to dispose the products (P) respectively of one product type onto one section of the buffer band (B) assigned to this product type by a storage administration computer (2B) and/or into a buffer jacket (12) assigned by the storage administration computer (2B).

8. A picking facility (1) according to one of the claims 1 to 4, **characterized in that** there is provided a continuous conveyor and/or a lane conveyor vehicle and/or a suspension conveyor for storing the products (P).

9. A picking facility (1) according to claim 2, **characterized in that** there are provided along the central band (5) central band automats (6), which are configured to dispose products (P) of the picking order onto the central band section assigned to the picking order, controlled by the controlling computer (2A).

10. A picking facility (1) according to any of the preceding claims, **characterized in that** there is provided at least one further rack unit (4) along the conveyor technology and that the controlling computer (2A) is configured to pick partial picking orders from both rack units (3, 4) onto the conveyor band.

11. A picking method for picking products (P), wherein the following steps are performed:
collecting products (P) of a picking order from a rack unit (3, 4) having two racks (R) and a transport system in the rack lane (RG) formed by the racks (R);
picking products (P) of the picking order that are stored in the rack unit (3, 4) in a buffer jacket (PU) assigned to the picking order as a partial picking order;
combining the partial picking orders being part of a picking order on a conveyor technology, in particular on a central band (5), by on-time discharging of the buffer jackets (PU).

## Revendications

1. Installation de préparation de commandes (1) avec un ordinateur de commande (2A) pour la préparation de commandes de produits (P) dans le cadre d'un ordre de prélèvement, où ladite installation de préparation de commandes (1) comporte au moins une unité de rayonnage (3, 4) constituée de deux rayons (R) pour le stockage de produits (P) et un système de transport pour le stockage et le déstockage des produits (P) prévu dans une allée de rayonnage (RG) formée par les deux rayons (R), où les produits (P) déstockés des rayons (R) peuvent être déposés à un emplacement de stockage provisoire, et où une technique de convoyage est prévue pour le convoyage des produits (P), **caractérisée**
**en ce qu'**au moins deux bacs de stockage temporaire (PU) sont prévus comme emplacement de stockage provisoire et en ce que l'ordinateur de commande (2A) est prévu pour la préparation dans un des bacs de stockage temporaire (PU) d'ordres de prélèvements partiels des produits (P) d'un ordre de prélèvement contenus dans les rayons (R) d'une unité de rayonnage (3, 4) et pour le regroupement des ordres de prélèvements partiels d'un ordre de prélèvement sur la technique de convoyage, par commande du système de transport et des bacs de stockage temporaire (PU).

2. Installation de préparation de commandes (1) selon la revendication 1, **caractérisée en ce que** la technique de convoyage est constituée d'une technique de tapis central, sur le tapis central (5) de laquelle un segment de tapis central où les ordres de prélèvements partiels d'un ordre de prélèvement seront préparés peut être fixé par l'ordinateur de commande (2A) par ordre de prélèvement.

3. Installation de préparation de commandes (1) selon la revendication 1, **caractérisée en ce que** la technique de convoyage est constituée d'un convoyeur continu ou d'un chariot de manutention ou d'un convoyeur suspendu, et **en ce que** la technique de convoyage est prévue pour le transport par ordre de prélèvement d'au moins un conteneur d'ordre dans lequel les ordres de prélèvements partiels de l'ordre de prélèvement seront préparés sous la commande de l'ordinateur de commande (2A).

4. Installation de préparation de commandes (1) selon l'une des revendications précédentes, **caractérisée en ce que** le système de transport est constitué d'un appareil de desserte de rayon (RBG) qui comprend par rayon (R) un véhicule pour le stockage et le déstockage des produits (P) dans et hors du rayon.

5. Installation de préparation de commandes (1) selon l'une des revendications précédentes, **caractérisée en ce qu'**un tapis de stockage temporaire (B) et/ou des bacs de stockage temporaire (PU) sont prévus pour le stockage de produits (P) dans l'unité de rayonnage (3, 4), le système de transport prélevant les produits (P) déposés sur le tapis de stockage temporaire (B) et/ou dans les bacs de stockage temporaire (PU) et déposant ceux-ci dans les rayons (R).

6. Installation de préparation de commandes (1) selon la revendication 5, **caractérisée en ce qu'**un un robot (11) est prévu pour le stockage de produits (P) sur le tapis de stockage temporaire (B) et/ou les bacs de stockage temporaire (PU).

7. Installation de préparation de commandes (1) selon la revendication 6, **caractérisée en ce qu'**un conteneur de stockage avec les produits (P) à stocker dans les rayons (R) peut être conduit vers le robot (11), le robot (11) étant prévu pour le retrait de différents types de produits hors du conteneur de stockage et pour le dépôt des produits (P) d'un type de produit sur un segment du tapis de stockage temporaire (B) affecté à ce type de produit par un ordinateur de gestion de stock (2B) et/ou dans un bac de stockage temporaire (12) affecté par l'ordinateur de gestion de stock (2B).

8. Installation de préparation de commandes (1) selon l'une des revendications 1 à 4, **caractérisée en ce qu'**un convoyeur continu et/ou un chariot de manutention et/ou un convoyeur suspendu sont prévus pour le stockage de produits (P).

9. Installation de préparation de commandes (1) selon la revendication 2, **caractérisée en ce que** des automates de tapis central (6) sont prévus le long du tapis central (5), lesquels sont commandés par l'ordinateur de commande (2A) pour le dépôt de produits (P) de l'ordre de prélèvement sur le segment de tapis central affecté à l'ordre de prélèvement.

10. Installation de préparation de commandes (1) selon l'une des revendications précédentes, **caractérisée en ce qu'**au moins une autre unité de rayonnage (4) est prévue le long de la technique de convoyage, et **en ce que** l'ordinateur de commande (2A) est prévu pour la préparation d'ordres de prélèvements partiels des deux unités de rayonnage (3, 4) sur le tapis de transport.

11. Procédé de préparation de commandes, pour la préparation de commandes de produits (P), où les étapes suivantes sont exécutées :
déstockage de produits (P) d'un ordre de prélèvement hors d'une unité de rayonnage (3, 4) comprenant deux rayons (R) et un système de transport dans l' allée de rayonnage (RG) formée par les rayons (R) ;
collecte des produits (P) de l'ordre de prélèvement stockés dans l'unité de rayonnage (3, 4) dans un bac de stockage temporaire (PU) attribué à l'ordre de prélèvement, en tant qu'ordre de prélèvement partiel ;
regroupement des ordres de prélèvements partiels correspondant à un ordre de prélèvement sur une technique de convoyage, en particulier sur un tapis central (5), par vidage en temps utile des bacs de stockage temporaire (PU).
